# EUROPÄISCHE PATENTSCHRIFT

(11) **EP 0 918 713 B1**
(45) Veröffentlichungstag und Bekanntmachung des Hinweises auf die Patenterteilung: **22.03.2000**
(21) Anmeldenummer: 97927145.9
(22) Anmeldetag: 06.06.1997
(51) Int. Cl.: B65G 47/14

(54) **VORRICHTUNG ZUM VEREINZELN UND POSITIONIEREN BIEGESCHLAFFER PROFILLEISTEN**
DEVICE FOR SEPARATING AND POSITIONING HIGHLY FLEXIBLE PROFILED STRIPS
PROCEDE POUR SEPARER ET POSITIONNER DES BAGUETTES PROFILEES SOUPLES EN FLEXION

(30) Priorität: 20.07.1996 DE 19629314
(43) Veröffentlichungstag der Anmeldung: 02.06.1999
(73) Patentinhaber: ITT MANUFACTURING ENTERPRISES, INC., Wilmington, Delaware 19801 (US)
(72) Erfinder: MORENO-CID VELASCO, Francisco, J., E-26911 Leganes (ES); GONZALEZ, Eladio, Serrano, E-28904 Getafe (ES); POYATOS, Antonio, Lamolda, Ochoa, 5, E-28923 Alcorcon (ES); LORENZO, Francisco, Souto, E-28041 Madrid (ES)
(74) Vertreter: Dreiss, Fuhlendorf, Steimle & Becker, Patentanwälte
(86) Internationale Anmeldenummer: EP9702936
(87) Internationale Veröffentlichungsnummer: WO9803416

(56) Entgegenhaltungen:
- EP-A- 0 158 070
- DE-A- 2 017 170

## Beschreibung

Die Erfindung bezieht sich auf eine Vorrichtung zum Vereinzeln und Positionieren biegeschlaffer Profilleisten für die nachfolgende Ausführung irgendwelcher Arbeitsprozesse. Unter dem Ausdruck "biegeschlaff" ist zu verstehen, daß die Profilleisten, insbesondere hinsichtlich ihrer Längsrichtung, nur eine geringe Formstabilität besitzen und sich unter der Wirkung ihrer eigenen Schwerkraft leicht in Form von Biegungen deformieren. Voraussetzung hierbei ist, daß die biegeschlaffen, beispielsweise aus Gummi oder einem gummiähnlichen Material bestehenden, Profilleisten eine im Verhältnis zu ihrer Querschnittsform schmale Lippe aufweisen, die weiter vom Mittelpunkt bzw. Schwerpunkt der Querschnittsfläche absteht als die übrigen Teile der Profilleisten. Insbesondere sind die biegeschlaffen Profilleisten Wischgummis für Scheibenwischer, die bekanntermaßen eine relativ massive Kopfleiste besitzen, an die über einen schmalen Kippsteg eine Wischlippe angeformt ist. Die Wischlippe besitzt eine schmale, zumeist dreieckartige Querschnittsgestalt, und sie steht weiter vom Mittelpunkt bzw. Schwerpunkt der Querschnittsfläche des Wischgummis ab als andere Teile. Die biegeschlaffen Profilleisten könnten aber auch allgemein Dichtleisten mit einer entsprechenden Querschnittsform sein, beispielsweise für Fenster oder Türen oder dergleichen.

Bei der Herstellung von Wischblättern für Fahrzeugscheibenwischer ist bereits ein hoher Automatisierungsgrad erreicht. Es ist gebräuchlich, daß die biegeschlaffen Wischgummis auf maschinellem Wege in ihrer Längsrichtung in die Krallenbügel eines vorgefertigten Wischblatt-Traggestells eingezogen werden. Hierbei ist es jedoch immer noch erforderlich, daß die Wischgummis von einer Arbeitskraft manuell vereinzelt und in die erforderliche lagerichtige Position gebracht werden, um sie dann lagerichtig einem Wischblatt-Montageautomaten zuzuführen. Die Arbeitskraft entnimmt dazu fortlaufend aus einem Speicherbehälter jeweils einen Wischgummi und legt diesen mit der Wischlippe nach unten zeigend in einen Eingabeschlitz des Montageautomaten ein. Bei Wischgummis der Ausführung mit einem für die Längsarretierung des Wischgummis an dem Wischblatt-Traggestell bzw. der Federschienen am Wischgummi geschlossenen ausgebildeten Kopfende sorgt die Arbeitskraft außerdem für ein hinsichtlich der Längsrichtung des Wischgummis lagerichtiges Einlegen in den Eingabeschlitz. Dieser manuell auszuführende Arbeitsprozeß stellt hinsichtlich einer möglichst durchgehenden Automatisierung der Fertigungslinie einen Schwachpunkt dar.

Aufgabe der Erfindung ist es deshalb, eine geeignete Vorrichtung zum Vereinzeln und Positionieren biegeschlaffer Profilleisten für nachfolgende Arbeitsprozesse, insbesondere von Wischgummis für die lagerichtige Zuführung zu einem Wischblatt-Montageautomaten, zu schaffen.

Erfindungsgemäß wird die Aufgabe durch eine Vorrichtung mit den Merkmalen des Anspruchs 1 gelöst. Mit einer solchen Vorrichtung, die aus einer Einrichtung zum Vereinzeln der biegeschlaffen Profilleisten quer zu ihrer Längserstreckung und aus einer nachfolgenden Einrichtung zum Positionieren der vereinzelten Profilleisten um deren Längsachse besteht, welche funktional miteinander verbunden sind, wird die Grundlage für eine weitergehende Automatisierung entsprechender Fertigungs- bzw. Montagelinien geschaffen.

Vorteilhafte Ausgestaltungen der Erfindung ergeben sich aus den Unteransprüchen bzw. aus den möglichen Anspruchskombinationen.

Eine vorteilhafte Ausgestaltung gemäß Anspruch 2 sieht vor, daß die Einrichtung zum Vereinzeln biegeschlaffer Profilleisten aus einem befüllbaren Speicherbehälter und einem Vorvereinzelungsmechanismus sowie einem endgültigen Vereinzelungsmechanismus besteht. Der Speicherbehälter ist dabei so ausgeführt, daß er eine größere Menge biegeschlaffer Profilleisten in zumindest grob angenäherter paralleler Ausrichtung aufnehmen kann. Eine derartig ausgebildete Vorrichtung zum Vereinzeln biegeschlaffer Profilleisten ist von Vorteil hinsichtlich einer funktionssicheren Vereinzelung der Profilleisten.

Ein möglichst einfacher Aufbau des Vorvereinzelungsmechanismus wird durch eine vorteilhafte Ausgestaltung gemäß Anspruch 3 erreicht. Dementsprechend wird der Vorvereinzelungsmechanismus von einer in Längsrichtung der Profilleisten an einer Seite des Speicherbehälters vorgesehenen Abgabeöffnung und von einer quer zu den Profilleisten zu der Abgabeöffnung hin geneigten Auflagefläche in dem Speicherbehälter gebildet, welche außerdem mit einem über der Aufgabeöffnung aufgehängten und die Aufgabeöffnung nach oben begrenzenden Klappensystem zusammenwirken. Dieses Klappensystem besteht dabei aus einer quer zu den Profilleisten verschwenkbaren ersten Klappe und einer an dieser ersten Klappe angebrachten zweiten Klappe, wobei die zweite Klappe gegenüber der ersten Klappe in der Höhe bewegbar ist. Die Profilleisten rutschen auf der geneigten Auflagefläche quer zu ihrer Längsrichtung zu der Abgabeöffnung hin, wobei das in Betrieb befindliche Klappensystem dafür sorgt, daß die biegeschlaffen Profilleisten in einer einzigen Reihe liegend parallel nebeneinander angeordnet werden und so der nachfolgenden endgültigen Vereinzelungsvorrichtung zugeführt werden können.

Um dabei mit Sicherheit exakt die zuvor beschriebene Anordnung der Profilleisten zu erhalten, wird eine Ausgestaltung gemäß Anspruch 4 empfohlen. Da in diesem Fall die Auflagefläche in dem Speicherbehälter lediglich in einem flachen Winkel von vorzugsweise 5° zu der Abgabeöffnung hin geneigt ist, wird der Vorvereinzelungsprozeß wesentlich dadurch unterstützt, daß die Auflagefläche in ihrer Ebene und quer zu den Profilleisten um eine bestimmte Weglänge, vorzugsweise um ca. 25 mm, zyklisch hin- und herbewegbar ist. Durch diese Maßnahme wird eine Förderung der Profilleisten quer zu ihrer Längsrichtung zu der Ausgabeöffnung hin erreicht, wodurch die zusätzliche Wirkung des zuvor beschriebenen Klappensystems die Vorvereinzelung und die Übergabe an den nachfolgenden endgültigen Vereinzelungsmechanismus bewirkt.

Eine vorteilhafte Ausgestaltung gemäß Anspruch 5 sieht vor, daß sich der endgültige Vereinzelungsmechanismus quer zur Längsrichtung der Profilleisten an den Vorvereinzelungsmechanismus anschließt. Der endgültige Vereinzelungsmechanismus wird dabei von einer Ebene gebildet, die sich mit einer stärkeren Neigung von vorzugsweise ca. 50° an den Vorvereinzelungsmechanismus anschließt. Zu dem endgültigen Vereinzelungsmechanismus gehört außerdem ein System aus quer zu den Profilleisten verschwenkbaren Vereinzelungsklinken und einem Vereinzelungsanschlag. Die Vereinzelungsklinken und der Vereinzelungsanschlag sind so zueinander angeordnet und aufeinander abgestimmt, daß die Vereinzelungsklinken zwischen die in Vereizelungsrichtung am weitesten vornliegende und die nachfolgende Profilleiste eingreifen, wobei der Vereinzelungsanschlag die am weitesten vorn liegende Profilleiste noch zurückhält. Durch Öffnen des Vereinzelungsanschlages wird allein die am weitesten vorn liegende Profilleiste freigegeben, so daß diese an die nächstfolgende Einrichtung abgegeben wird, während alle weiteren vorvereinzelten Profilleisten von den Vereinzelungsklinken zurückgehalten werden. Nachdem der Vereinzelungsanschlag wieder geschlossen ist, werden die Vereinzelungsklinken geöffnet, so daß die vorvereinzelten Profilleisten bis an den Vereinzelungsanschlag vorrutschen können. Durch erneuten Eingriff der Vereinzelungsklinken zwischen die nunmehr am weitesten vornliegende und die nachfolgenden Profilleisten erfolgt der nächste endgültige Vereinzelungsvorgang in gleicher Weise.

Um bei der endgültigen Vereinzelung Funktionsstörungen durch nicht einwandfrei abgegebene vereinzelte Profilleisten auszuschließen, wird eine Ausgestaltung gemäß Anspruch 6 empfohlen, welche vorsieht, daß an dem Vereinzelungsanschlag zusätzlich ein auf- und abwärts verschiebbarer Abstreifer angebracht ist. Dieser Abstreifer sorgt dafür, daß die vereinzelte Profilleiste mit Sicherheit an die nachfolgende Einrichtung abgegeben wird.

Bevorzugt wird eine Ausgestaltung gemäß Anspruch 7, welche darauf abzielt, die in dem endgültigen Vereinzelungsmechanismus vereinzelte Profilleiste in einer für den nachfolgenden Prozeß der Positionierung günstigen Art und Weise an die nachfolgende Einrichtung zum Positionieren biegeschlaffer Profilleisten weiterzugeben. Demgemäß schließt sich an den endgültigen Vereinzelungsmechanismus eine weitere stark geneigte Ebene an, die vorzugsweise ca. 75° geneigt ist. Außerdem sind zwei Fangdorne vorgesehen, welche nach oben von der geneigten Ebene abstehen und welche außerdem bis unter die obere Fläche dieser Ebene zurückziehbar sind. In Längsrichtung der Profilleisten befinden sich die Fangdorne in einem solchen Abstand voneinander, daß sie eine vereinzelte biegeschlaffe Profilleiste, die von dem endgültigen Vereinzelungsmechanismus abgegeben wird, derartig abfangen, daß dieser Profilleiste eine Durchbiegung in Richtung auf die unterhalb angeordnete Einrichtung zum Positionieren der biegeschlaffen Profilleisten verliehen wird. Durch Zurückziehen der Fangdorne bis unter die obere Fläche der geneigten Ebene wird die vereinzelte Profilleiste freigegeben, so daß sie aufgrund der Schwerkraft an die Einrichtung zum Positionieren übergeben wird.

Entsprechend einer vorteilhaften Ausgestaltung der Erfindung gemäß Anspruch 8 weist die Einrichtung zum Positionieren der vereinzelten biegeschlaffen Profilleisten als wesentlichen Bestandteil ein Walzenpaar auf, daß von zwei parallel zueinander angeordneten und mit gleicher Drehrichtung antreibbaren Walzen gebildet ist. Zwischen den Walzen besteht ein Walzenspalt, dessen Größe in Abhängigkeit von der Gestalt und von der Größe des Querschnitts der betreffenden Profilleisten festgelegt ist. Dieses Walzenpaar ist derartig, vorzugsweise unterhalb der Einrichtung zum Vereinzeln der biegeschlaffen Profilleisten, angeordnet, daß die vereinzelten Profilleisten in zumindest annähernder Längsausrichtung im Bereich des Walzenspaltes auf das Walzenpaar aufgebbar sind. Aufgrund der speziellen Geometrie der biegeschlaffen Profilleisten und der gleichen Drehrichtung der beiden Walzen des Walzenpaares wird die Profilleiste von dem Walzenpaar solange mitgenommen und um seine Längsachse gedreht, bis die schmale Lippe der Profilleiste nach unten weisend in den Walzenspalt gelangt ist. Bei diesem Vorgang wird die ungleichmäßige Geometrie des Querschnittes der Profilleiste ausgenutzt. Wenn die Profilleiste ihre vorgesehene Position im Walzenspalt erreicht hat, wird das Walzenpaar stillgesetzt, und die vereinzelte Profilleiste kann lagerichtig zu einem nachfolgenden Arbeitsprozeß übergeben werden.

Um in jedem Fall zu gewährleisten, daß die biegeschlaffe Profilleiste von dem Walzenpaar bis zum Erreichen ihrer richtigen Lage im Walzenspalt um ihre Längsachse gedreht wird, wird eine Ausgestaltung der Erfindung gemäß Anspruch 9 empfohlen. Mindestens eine Walze des Walzenpaares weist örtlich begrenzte Abschnitte auf, die von der exakt zylindrischen Mantelfläche abweichen und die vorzugsweise in Reihen auf axparallelen Mantellinien angeordnet sind. Diese Abschnitte sorgen dafür, daß die Profilleiste nicht ständig auf den Walzenoberflächen rutscht, sondern zumindest durch eine Walze mitgenommen wird.

Es wird eine vorteilhafte Ausgestaltung gemäß Anspruch 10 empfohlen, wonach eine Detektorvorrichtung vorgesehen ist, welche das Erreichen der korrekten Lage der Profilleiste in dem Walzenspalt feststellt. Diese Detektorvorrichtung kann dabei vorteilhafterweise auf dem Prinzip einer Lichtschranke arbeiten, welche innerhalb von fluchtenden Umfangsnuten in den beiden Walzen des Walzenpaares derartig verläuft, daß sie nur durch die ordnungsgemäß in den Walzenspalt hineinragende schmale Lippe der Profilleiste unterbrochen werden kann.

Von Vorteil ist in diesem Zusammenhang weiterhin eine vorteilhafte Ausgestaltung gemäß Anspruch 11, welche vorsieht, daß die in der Detektorvorrichtung gewonnenen Meßgrößen als Signale zur automatischen Steuerung der gesamten Vorrichtung bzw. verschiedener Komponenten der Vorrichtung verwendet werden. Beispielsweise kann in Abhängigkeit von der durch die Detektorvorrichtung gewonnene Meßgröße das Walzenpaar stillgesetzt und der Übergabeprozeß der vereinzelten Wischleiste aktiviert werden. Andererseits ist die Möglichkeit gegeben, automatisch die Profilleiste aus dem Walzenspalt zu entfernen, wenn die Profilleiste nach einer vorgegebenen Zeit nicht ihre vorbestimmte Position erreicht.

Empfohlen wird weiterhin eine vorteilhafte Ausgestaltung gemäß Anspruch 12. Hierbei wird die Einrichtung zum Positionieren biegeschlaffer Profilleisten durch einen Ausstoßer ergänzt, der in Längsrichtung des Walzenpaares bewegbar ist und somit für die lagerichtige Übergabe einer vereinzelten Profilleiste zu einem nachfolgenden Arbeitsprozeß vorgesehen ist. Der von den beiden Walzen des Walzenpaares gebildete Walzenspalt dient hierbei gleichzeitig als Führungseinrichtung der biegeschlaffen Profilleiste bis zur Nahtstelle, an welcher sich dann eine Vorrichtung oder Einrichtung für die Ausführung weiterer Arbeitsprozesse anschließt.

Bevorzugt wird dabei eine Ausgestaltung gemäß Anspruch 13, welche vorsieht, daß der in Längsrichtung des Walzenpaares bewegbare Ausstoßer an dem in Ausstoßrichtung hinteren Ende der im Walzenspalt befindlichen Profilleiste angreift, wobei in den Ausstoßer zusätzlich noch eine, vorzugsweise auf dem Prinzip der Stauluftmessung arbeitende, Prüfeinrichtung integriert ist. Diese Prüfeinrichtung ist so gestaltet, daß sie bei unterschiedlich gestalteten Enden der Profilleisten deren richtige Lage im Walzenspalt hinsichtlich der Längsrichtung der Profilleiste erkennt. Dieses ist beispielsweise wichtig, wenn die Profilleiste ein Wischgummi ist, der für seine Längsarretierung am Wischblatt-Traggestell ein speziell ausgebildetes geschlossenes Ende aufweist, so daß er mit dem gegenüberliegenden offenen Ende voran in die Haltekrallen des Wischblatt-Traggestells eingezogen werden muß. Wenn die in den Ausstoßer integrierte Prüfvorrichtung erkennt, daß das geschlossene Ende der Profilleiste fälschlicherweise in Ausstoßrichtung vorn liegt, wird veranlaßt, daß diese Profilleiste nicht an den nachfolgenden Arbeitsprozeß übergeben, sondern vorher aus dem Walzenspalt entfernt wird.

Für die Entfernung einer biegeschlaffen Profilleiste von dem Walzenpaar, die hinsichtlich ihrer Längsrichtung falsch in dem Walzenspalt liegt oder die nicht ihre vorgesehene Position mit der abstehenden Lippe nach unten in dem Walzenspalt erreicht, ist eine Ausgestaltung der Erfindung gemäß Anspruch 14 von Vorteil. Unterhalb des Walzenspaltes ist ein Düsenrohr so angeordnet, daß seine Düsenöffnungen nach oben gerichtet sind. Durch Beaufschlagung mit Druckgas oder Druckluft ist es möglich, eine Profilleiste quer zu ihrer Längsrichtung aus dem Walzenspalt bzw. von dem Walzenpaar auszublasen.

Weitere Einzelheiten und Vorteile der Erfindung werden nachfolgend anhand von Zeichnungen näher beschrieben. Die Zeichnungen zeigen:
- Fig. 1: einen Wischgummi, der in ein Wischblatt-Traggestell eingezogen wird,
- Fig. 2: in vergrößerter Darstellung einen Querschnitt eines Wischgummis,
- Fig. 3: in schematischer zweidimensionaler Darstellung eine Vorrichtung zum Vereinzeln und Positionieren biegeschlaffer Profilleisten und
- Fig. 4: in schematischer dreidimensionaler Darstellung eine Vorrichtung zum Vereinzeln und Positionieren biegeschlaffer Profilleisten.

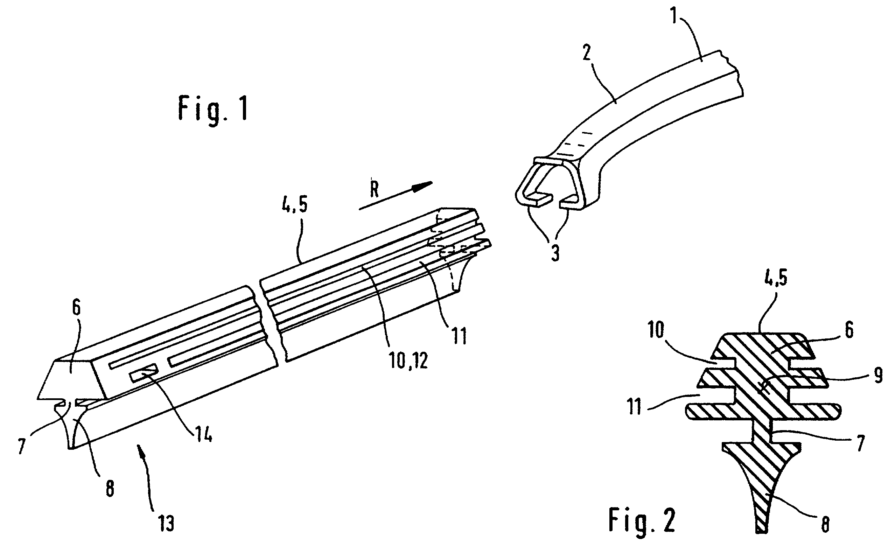

Die vorliegende Erfindung bezieht sich auf eine Vorrichtung zum Vereinzeln und Positionieren biegeschlaffer Profilleisten, vorzugsweise für ihre lagerichtige Zuführung zu nachfolgenden Arbeitsprozessen. Ein Beispiel hierfür ist das Vereinzeln und Positionieren von Wischgummis für Scheibenwischer, die anschließend einem Wischblatt-Montageautomaten zugeführt werden, in welchem sie in ihrer Längsrichtung in ein entsprechendes Wischblatt-Traggestell eingezogen werden. In Fig. 1 ist als Bestandteil eines Wischblatt-Traggestells 1 das äußere Ende eines Krallenbügels 2 gezeigt, an welchem die beiden Krallen 3 derartig nach einwärts umgebogen sind, daß sie eine Aufnahme für einen Wischgummi 4 bilden, welcher eine biegeschlaffe Profilleiste 5 im Sinne der Erfindung ist. Der Wischgummi 4 weist, wie auch in Fig. 2 deutlich zu erkennen ist, eine relativ massive Kopfleiste 6 auf, an welcher einstückig über einen schmalen Kippsteg 7 eine Wischlippe 8 befestigt ist. Die Wischlippe 8 besitzt im wesentlichen eine schmale dreieckartige Querschnittsform und steht von dem Schwerpunkt 9 der Querschnittsfläche weiter ab als die übrigen Teile des Wischgummis 4. Es ist noch zu erkennen, daß in die Längsseiten der Kopfleiste 6 übereinanderliegend jeweils die Längsnuten 10 und 11 eingebracht sind, wobei in die Längsnuten 10 druckverteilende Federschienen 12 einlegbar sind und in die Längsnuten 11 die Krallen 3 des Wischblatt-Traggestells 1 eingreifen.

In Fig. 1 ist zu erkennen, daß die biegeschlaffe Profilleiste 5 in Form des Wischgummis 4 längs, das heißt in Einzugsrichtung R in das Wischblatt-Traggestell 1 eingezogen wird. Das hinsichtlich der Einzugsrichtung R hintere Ende 13 des Wischgummis 4 ist dabei geschlossen ausgebildet. Das bedeutet, daß die Längsnuten 10 und 11 nicht durchgängig sind, so daß einerseits die Federschienen 12 in Längsrichtung in den Längsnuten 10 arretierbar und der Wischgummi selbst in Längsrichtung an dem äußeren Ende des äußeren Krallenbügels 2 arretierbar ist. Letzteres wird dadurch erreicht, daß das äußere Paar Krallen 3 in die an dem geschlossenen Ende 13 des Wischgummis 4 vorgesehenen Taschen 14 eingreift.

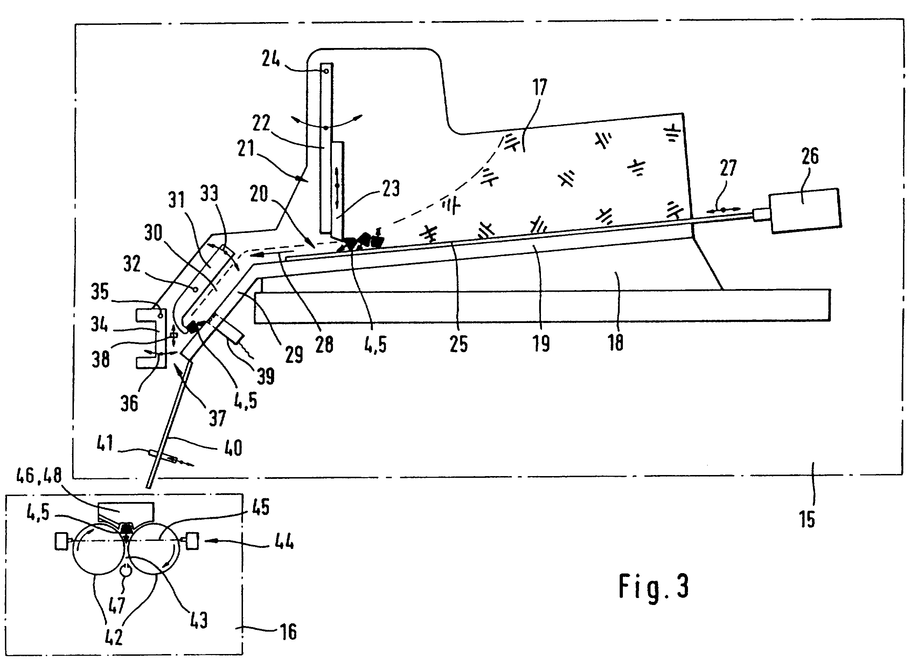

In schematischer Art und Weise ist in Fig. 3 eine Vorrichtung zum Vereinzeln und Positionieren von Wischgummis für deren nachfolgende Zuführung zu einem Wischblatt-Montageautomaten dargestellt. Diese Vorrichtung zum Vereinzeln und Positionieren von Wischgummis ist im wesentlichen in eine Einrichtung 15 zum Vereinzeln der Wischgummis 4 und in eine Einrichtung 16 zum Positionieren der vereinzelten Wischgummis 4 gegliedert. Die Einrichtung 15 zum Vereinzeln der Wischgummis 4 weist einen Speicherbehälter 17 auf, der oben offen ist und somit bedarfsweise befüllt werden kann. Der Speicherbehälter 17 ist auf einem Gestell 18 montiert, und es ist erkennbar, daß der Behälterboden 19 in flachem Winkel von ca. 5° nach links geneigt ist. Der Behälterboden 19 ist dabei zu einer Abgabeöffnung 20 des Speicherbehälters 17 hin geneigt, wobei die Abgabeöffnung 20 in Längsrichtung der Wischgummis 4 angeordnet ist, die in zumindest grober paralleler Ausrichtung im Speicherbehälter 17 gespeichert sind. Nach oben hin wird die Abgabeöffnung 20 durch ein Klappensystem 21 begrenzt. Das Klappensystem 21 wird dabei von einer ersten Klappe 22 und einer zweiten Klappe 23 gebildet, wobei die erste Klappe 22 im oberen Bereich der Seitenwände des Speicherbehälters 17 so aufgehängt ist, daß sie quer zur Längsrichtung der Wischgummis 4 um die Schwenkachse 24 verschwenkbar ist. Die zweite Klappe 23 ist an der in das Innere des Speicherbehälters 17 gerichteten Seite der ersten Klappe 22 so angebracht, daß sie, vorzugsweise zwischen zwei Endpunkten, in der Höhe verschiebbar ist. Die Bewegungsrichtungen der beiden Klappen 22 und 23 des Klappensystems 21 sind in Fig. 3 mit entsprechenden Pfeilen angedeutet. Auf dem Behälterboden 19 des Speicherbehälters 17 ist außerdem eine Auflagefläche 25 angeordnet, die mit einem Verstellantrieb in Form eines pneumatischen Zylinders 26 verbunden ist. Somit ist die ebenfalls in einem Winkel von ca. 5° zur Abgabeöffnung 20 hin geneigte Auflagefläche 25 in Richtung des Doppelpfeiles 27 bewegbar, vorzugsweise zwischen zwei festen Endlagen. Es ist zu erkennen, daß die Auflagefläche 25 unterhalb des Klappensystems 21 durch die Abgabeöffnung 20 hindurchreicht.

Das durch in Fig. 3 nicht dargestellte Stellantriebe bewegbare Klappensystem 21 bildet im Zusammenwirken mit der verschiebbaren Auflagefläche 25 einen Vorvereinzelungsmechanismus für die in dem Speicherbehälter 17 gespeicherten biegeschlaffen Profilleisten 5 in Form von Wischgummis 4. Die Bewegungen des Klappensystems 21 und der Auflagefläche 25 sind so aufeinander abgestimmt, daß die Wischgummis 4 vorvereinzelt aus dem Speicherbehälter 17 abgegeben werden. Dazu werden die Wischgummis 4 beim Passieren der Abgabeöffnung 20 in einer einzigen Reihe und dabei parallel zueinander ausgerichtet liegend quer zu ihrer Längsrichtung, d.h. in Richtung des Pfeiles 28 gefördert. In Anpassung an die Abmessungen der Wischgummis 4 beträgt die Weglänge der zyklischen Bewegung der Auflageflächen 25 in Richtung des Doppelpfeiles 27 ca. 25 mm.

In Richtung der Neigung des Behälterbodens 19 des Speicherbehälters 17 schließt sich an den vorstehend beschriebenen Vorvereinzelungsmechanismus ein endgültiger Vereinzelungsmechanismus an. Zu diesem endgültigen Vereinzelungsmechanismus gehört eine Ebene 29, die sich unmittelbar an den in einem flachen Winkel von ca. 5° geneigten Behälterboden 19 anschließt, die jedoch stärker geneigt ist. Der Neigungswinkel beträgt ca. 50°. Die Ebene 29 ist derartig von Wänden eingefaßt, daß ein Schacht 30 gebildet ist. Zu dem endgültigen Vereinzelungsmechanismus gehört ein Paar von Vereinzelungsklinken 31, die um eine parallel zu den Wischgummis 4 angeordnete Schwenkachse 32 und dabei in Richtung des Doppelpfeiles 33 verschwenkbar sind. Weiterhin gehört dazu ein Vereinzelungsanschlag 34, der um die ebenfalls parallel zu den Wischgummis 4 angeordnete Schwenkachse 35 in Richtung des Doppelpfeiles 36 verschwenkbar gelagert ist, so daß er entweder den Schacht 30 verschließt oder eine Abgabeöffnung 37 freigibt. An der zu dem Schacht 30 hinweisenden Seite des Vereinzelungsanschlages 4 ist noch ein Abstreifer 38 angebracht, der auf und ab bewegbar ist, was durch einen entsprechenden Doppelpfeil angedeutet ist. Schließlich ist noch ein Sensor 39 zu erkennen, der in der Ebene 29 angeordnet und dazu bestimmt ist, festzustellen, ob sich in dem Schacht 30 vorvereinzelte Profilleisten 5 bzw. Wischgummis 4 befinden. Die Vereinzelungsklinken 31 besitzen an ihrem unteren Ende eine in Richtung auf die Ebene 29 weisende Nase, die so ausgebildet ist, daß in einer geschlossenen Stellung der Klinken 31 in dem Schacht 30 befindliche Wischgummis 4 zurückgehalten werden. Durch Verschwenken der Vereinzelungsklinken 31 in eine geöffnete Stellung, wobei sich gleichzeitig der Vereinzelungsanschlag 34 in einer den Schacht 30 verschließenden Stellung befindet, werden die in dem Schacht 30 befindlichen Wischgummis 4 freigegeben, so daß diese bis gegen den Vereinzelungsanschlag 34 rutschen können. Der Abstand zwischen den Nasen der Vereinzelungsklinken 31 und dem Vereinzelungsanschlag 34 ist dabei so festgelegt, daß beim Verschwenken der Vereinzelungsklinken 31 in die geschlossene Stellung die Nasen der Vereinzelungsklinken 31 zwischen den am Vereinzelungsanschlag 34 anliegenden Wischgummi 4 und dem nachfolgenden Wischgummi 4 eingreifen und somit eine Sperre bilden. Durch Öffnen des Vereinzelungsanschlages 34 und ggf. Betätigen des Abstreifers 38 wird ein einziger vereinzelter Wischgummi 4 durch die Abgabeöffnung 37 quer zu seiner Längsrichtung abgegeben.

Um eine optimale Übergabe eines vereinzelten Wischgummis 4 an die seitlich unterhalb der Einrichtung 15 zum Vereinzeln biegeschlaffer Profilleisten 5 zu gewährleisten, schließt sich unterhalb der Abgabeöffnung 37 an den endgültigen Vereinzelungsmechanismus eine weitere Ebene 40 an, die mit einer Neigung von ca. 75° sehr stark geneigt ist und die sich an die untere Kante der Ebene 29 anschließt. An der Ebene 40 ist ein Paar Fangdorne 41 angebracht, wobei die Fangdorne 41 entsprechende Durchbrüche der Ebene 40 durchgreifen und bis unter die nach oben weisende Oberfläche der Ebene 40 zurückziehbar sind. Die Fangddrne 41 sind in Längsrichtung des Wischgummis 40 gesehen in einem solchen Abstand voneinander angebracht, daß ein aus der Abgabeöffnung 37 abgegebener vereinzelter Wischgummi 4 abgefangen und dabei in eine solche Lage gebracht wird, daß der mittlere Bereich des Wischgummis 4 nach unten, d.h. in Richtung der Einrichtung 16 zum Positionieren biegeschlaffer Profilleisten 5, durchgebogen ist.

Unterhalb der sehr stark geneigten Ebene 40 ist die Einrichtung 16 zum Positionieren der vereinzelten Wischgummis 4 angeordnet. Ein wesentlicher Bestandteil dieser Einrichtung 16 ist ein Walzenpaar 42, welches von zwei gleich großen Walzen gebildet ist, die parallel nebeneinander und in Längsrichtung der Wischgummis 4 angeordnet sind. Zwischen den beiden Walzen des Walzenpaares 42 besteht ein Walzenspalt 43, dessen Breite in Abhängigkeit von der Querschnittsform und der Größe der zu vereinzelnden biegeschlaffen Profilleisten 5 festgelegt ist. Der Walzenspalt 43 ist jedenfalls so beschaffen, daß ein Wischgummi 4 mit seiner Wischlippe 8 (siehe Fig. 2) voran von oben her in den Walzenspalt 43 eintauchen kann. Wesentlich ist, daß die beiden Walzen des Walzenpaares 42 während des Vorganges zum Positionieren eines vereinzelten Wischgummis 4 mit gleicher Drehrichtung antreibbar sind. Die gleiche Drehrichtung der Walzen des Walzenpaares 42 ist in Fig. 3 mit entsprechenden Pfeilen in den Walzen angedeutet. Außerdem weisen die Walzen des Walzenpaares 42 in ihrer Oberfläche örtlich begrenzte Unregelmäßigkeiten auf, beispielsweise in Form von Körnerschlägen, die dazu dienen, daß ein auf dem Walzenpaar 42 befindlicher Wischgummi 4 besser mitgenommen und um seine Längsachse gedreht wird. In der Zeichnung sind diese Unregelmäßigkeiten bzw. Körnerschläge nicht sichtbar.

Eine Detektorvorrichtung 44 ist so aufgebaut, daß eine Lichtschranke 45 quer zu dem Walzenpaar 42 verläuft und dabei so justiert ist, daß die Lichtschranke 45 nur dann von einer in den Walzenspalt 43 eintauchenden Wischlippe 8 eines Wischgummis 4 unterbrochen wird, wenn der Wischgummi 4 seine richtige Position in dem Walzenspalt 43 erreicht hat. Die Detektorvorrichtung ist dabei vorzugsweise nahe dem Ende der Profilleiste5 bzw. des Wischgummis 4 angeordnet, welches in Ausstoßrichtung aus dem Walzenspalt 43 vorn liegt. Oberhalb des Walzenspaltes 43 ist ein Ausstoßer 46 zu erkennen, der in Längsrichtung des Walzenpaares 42 bewegbar und dabei so ausgebildet ist, daß er einen im Walzenspalt 43 richtig positionierten Wischgummi 4 in Längsrichtung des Walzenpaares 42 ausstoßen und dadurch einem nachfolgenden Arbeitsprozeß zuführen kann. Unterhalb des Walzenspaltes 43 ist ein Düsenrohr 47 angebracht, dessen Düsenöffnungen nach oben gerichtet sind. Das Düsenrohr 47 ist mit Druckgas oder mit Druckluft beaufschlagbar, um einen Wischgummi 4, der nicht seine richtige Lage in dem Walzenspalt 43 erreicht, aus dem Walzenpaar 42 ausblasen zu können.

Wenn ein vereinzelter Wischgummi, der zunächst von den Fangdornen 41 auf der stark geneigten Ebene 40 abgefangen wird, durch Zurückziehen der beiden Fangdorne 41 freigegeben wird, fällt dieser auf das darunterliegende in Rotation befindliche Walzenpaar 42. Aufgrund der Durchbiegung des vereinzelten Wischgummis 4 in Richtung zu dem Walzenpaar 42 hin gelangt der Wischgummi 4 in einer günstigen Lage auf die Oberseite des Walzenpaares 42. Durch die gleichsinnige Drehrichtung der beiden Walzen des Walzenpaares 42 in Verbindung mit der speziellen Gestalt des Querschnittes des Wischgummis 4 wird der Wischgummi 4 von dem Walzenpaar 42 mitgenommen und um seine Längsachse gedreht. Diese Drehung um die Längsachse des Wischgummis 4 erfolgt so lange, bis aufgrund der Schwerkraft und der Querschnittsgeometrie die Wischlippe 8 des Wischgummis 4 in den Walzenspalt 43 eintaucht. Dieses ist die gewünschte Position, die der Wischgummi 4 erreichen soll und in welcher er in seiner Längsrichtung einem nachfolgenden Arbeitsprozeß zugeführt werden soll. Wenn die Wischlippe 8 in den Walzenspalt 43 gelangt ist, wird durch Unterbrechen der Lichtschranke 45 von der Detektorvorrichtung 44 festgestellt, daß der Wischgummi 4 seine richtige Lage erreicht hat. Nunmehr wird das Walzenpaar stillgesetzt, und der Ausstoßer 46 wird aktiviert, um den Wischgummi 4 in Längsrichtung des Walzenpaares 42 aus dem Walzenspalt 43 zu befördern. Der Kopf 48 des Ausstoßers 46, der an dem in Ausstoßrichtung hinteren Ende 13 des Wischgummis 4 angreift, ist außerdem mit einer auf dem Prinzip der Stauluftmessung arbeitenden Prüfeinrichtung ausgestattet. Diese Prüfeinrichtung stellt fest, ob ein Wischgummi 4 mit einem geschlossen ausgebildeten hinteren Ende 13 (siehe Fig. 1) hinsichtlich seiner Längsrichtung richtig in dem Walzenspalt 43 angeordnet ist. Falls das in Ausstoßrichtung hintere Ende des in dem Walzenspalt 43 positionierten Wischgummis 4 nicht geschlossen ausgebildet ist, wird das Düsenrohr 47 aktiviert, um den Wischgummi 4 aus dem Walzenspalt 43 auszublasen. Das Düsenrohr 47 wird ebenfalls aktiviert, wenn nach Ablauf einer vorgegebenen Zeit der vereinzelte Wischgummi 4 nicht seine gewünschte Position in dem Walzenspalt 43 erreicht. Damit wird gewährleistet, daß der Vorgang des Positionierens eines vereinzelten Wischgummis 4 in dem Walzenspalt 43 nicht übermäßig lange Zeit beansprucht. Vorteilhaft ist es, wenn die in der Detektorvorrichtung 44 bzw. durch die auf dem Prinzip der Stauluftmessung arbeitende Prüfvorrichtung im Kopf 48 des Ausstoßes 46 gewonnenen Meßgrößen als Signale zur automatischen Steuerung eines Ausblasvorganges bzw. zur automatischen Steuerung der gesamten Vorrichtung verwendet werden.

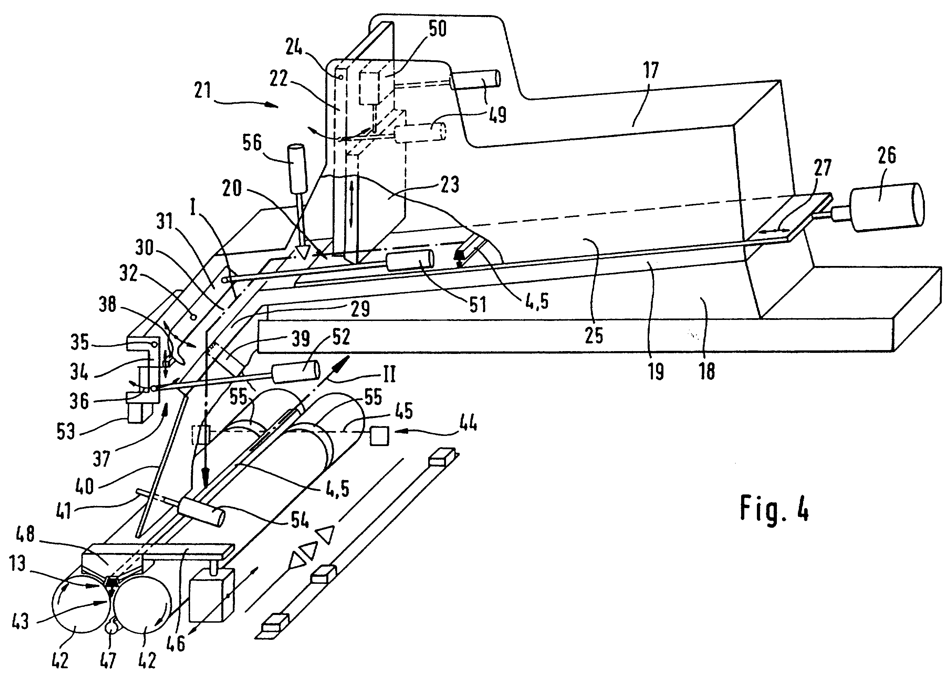

In Fig. 4 ist in schematischer Darstellung eine Vorrichtung zum Vereinzeln und Positionieren biegeschlaffer Profilleisten zum besseren Verständnis dreidimensional dargestellt. Die in Fig. 4 gezeigte Vorrichtung entspricht im wesentlichen derjenigen von Fig. 3, weshalb auch für gleiche Teile die gleichen Bezugszeichen verwendet worden sind und auf eine Wiederholung der Beschreibung gleicher Merkmale bzw. gleicher Sachverhalte weitgehend verzichtet wird. Es ist der oben offene Speicherbehälter 17 erkennbar, der mit einem in Richtung auf die Abgabeöffnung 20 mit ca. 5° geneigtem Behälterboden 19 auf einem Gestell 18 angeordnet ist. Auf dem Behälterboden 19 ist die Auflagefläche 25 in Richtung des Doppelpfeiles 27 zyklisch um eine Weglänge von ca. 25 mm bewegbar gelagert. Die Verschiebebewegung wird durch einen pneumatischen Zylinder 26 erreicht, welcher mit der Auflagefläche 25 verbunden ist. Über der Abgabeöffnung 20 ist das Klappensystem 21 erkennbar, wobei die erste Klappe 22 durch die beiden pneumatischen Zylinder 49 um ihre Schwenkachse 24 verschwenkbar ist. Die beiden pneumatischen Zylinder 49 sind beispielsweise an den Seitenwänden des Speicherbehälters 17 angebracht. Als Antriebsorgan für die zweite Klappe 23 dient ein weiterer pneumatischer Zylinder 50, der an der Rückseite der ersten Klappe 22 angebracht ist.

In Fig. 4 sind noch weitere pneumatische Zylinder als Verstellantriebe erkennbar. Das Paar von Vereinzelungsklinken 31 wird von dem pneumatischen Zylinder 51 und der Vereinzelungsanschlag 34 wird von dem pneumatischen Zylinder 52 angetrieben, wohingegen der an dem Vereinzelungsanschlag 34 angebrachte Abstreifer 38 von dem Zylinder 53 antreibbar ist, welcher wiederum direkt an dem Vereinzelungsanschlag 34 angebracht ist. Auch die beiden Fangdorne 41 in der Ebene 40, wovon in Fig. 4 nur einer sichtbar ist, werden durch pneumatische Zylinder 54 bewegt.

In den Speicherbehälter 17 ist beispielhaft ein Wischgummi 4 eingezeichnet. Die beiden Pfeile I und II sollen den Weg veranschaulichen, den der Wischgummi 4 beim Betrieb der Vorrichtung zurücklegt. Durch das Zusammenspiel des Klappensystems 21 und der zyklisch bewegten Auflagefläche 25 erfolgt eine Vorvereinzelung der in dem Speicherbehälter 17 bevorrateten Wischgummis 4. Der Vorvereinzelungsprozeß wird dabei noch zusätzlich durch einen Vorvereinzeler 56 unterstützt, der in Richtung des Pfeiles I hinter dem Klappensystem 21 angeordnet ist. Durch das Zusammenspiel der zwei Vereinzelungsklinken 31, wovon in Fig. 4 wiederum nur eine Vereinzelungsklinke 31 sichtbar ist, sowie dem Vereinzelungsanschlag 34 in Verbindung mit dem Abstreifer 38 werden die innerhalb des Schachtes 30 auf der Ebene 29 in einer Reihe nebeneinander liegenden vorvereinzelten Wischgummis 4 quer zu ihrer Längsrichtung endgültig vereinzelt. Durch die Abgabeöffnung 37 gelangt dann der vereinzelte Wischgummi 4 auf die stark geneigte Ebene 40 und wird dort durch die beiden Fangdorne 41 abgefangen, wobei er vorübergehend mit einer Durchbiegung in Richtung auf das darunter angeordnete Walzenpaar 42 gehalten wird. Durch Zurückziehen der Fangdorne 41 bis unterhalb der Ebene 40 wird der vereinzelte Wischgummi 4 freigegeben und gelangt im Bereich des Walzenspaltes 43 auf das Walzenpaar 42, welches von zwei mit gleicher Drehrichtung antreibbaren Walzen gebildet ist. Durch die Drehbewegung der beiden Walzen des Walzenpaares 42 wird der Wischgummi 4 so lange um seine Längsachse gedreht, bis er mit seiner Wischlippe 8 voran in den Walzenspalt 43 eintaucht und somit die gewünschte Position einnimmt. Die Detektorvorrichtung 44 arbeitet mittels einer Lichtschranke 45, welche sich quer zu dem Walzenpaar 42 durch fluchtend angeordnete Umfangsnuten 55 in den beiden Walzen des Walzenpaares 42 erstreckt. Wenn der Wischgummi 4 seine gewünschte Position in dem Walzenspalt 43 erreicht hat, wird durch die Wischlippe 8 des Wischgummis 4 die Lichtschranke 45 unterbrochen, wodurch ein Signal erzeugt wird. Die Detektorvorrichtung 44 setzt das Walzenpaar 42 still und aktiviert den Ausstoßer 46, der mit seinem Kopf 48 an dem in Ausstoßrichtung, diese entspricht der durch den Pfeil II angezeigten Richtung, hinteren Ende 13 des Wischgummis 4 angreift. Eine in den Kopf 48 des Ausstoßers 46 integrierte Prüfvorrichtung, die auf dem Prinzip der Stauluftmessung arbeitet, stellt fest, ob dieses hintere Ende 13 des Wischgummis 4 das geschlossen ausgebildete Ende des Wischgummis 4 ist. Außerdem wird im Zusammenwirken der Detektorvorrichtung 44 und der in den Kopf 48 des Ausstoßers 46 integrierte Prüfvorrichtung geprüft, ob der Wischgummi 4 über seine gesamte Länge richtig im Walzenspalt 43 Liegt und nicht etwa in sich verdreht ist. Bei positivem Ergebnis bewegt sich der Ausstoßer 46 in Längsrichtung des Wischgummis 4, d.h. in Richtung des Pfeiles II, um den Wischgummi 4 in Längsrichtung aus dem Walzenspalt 43 herauszubefördern und dadurch zu einem nachfolgenden Arbeitsprozeß zu übergeben. Im vorliegenden Fall schließt sich an die dargestellte Vorrichtung zum Vereinzeln und Positionieren von biegeschlaffen Wischgummis 4 ein Wischblatt-Montageautomat an, in welchem, wie zu Fig. 1 beschrieben, der Wischgummi 4 mit den Federschienen 12 bestückt und anschließend in Längsrichtung in die Krallen 3 des Wischblatt-Traggestells 1 eingezogen wird. Wenn der Wischgummi 4 nach einer vorbestimmten Zeitdauer nicht seine gewünschte Lage in dem Walzenspalt 43 erreicht, wird er aus dem Walzenspalt 43 ausgeblasen, indem über das Düsenrohr 47 ein Druckluftstoß abgegeben wird. Gleiches erfolgt, wenn die in den Kopf 48 des Ausstoßers 46 integrierte Prüfeinrichtung feststellt, daß das hintere Ende des Wischgummis 4 nicht geschlossen ausgebildet ist.

## Patentansprüche

1. Vorrichtung zum Vereinzeln und Positionieren biegeschlaffer Profilleisten, vorzugsweise für ihre lagerichtige Zuführung zu nachfolgenden Arbeitsprozessen, insbesondere von Wischgummis (4) zu einem Wischblatt-Montageautomaten, wobei die biegeschlaffen Profilleisten (5) eine im Verhältnis zu ihrer Querschnittsform schmale Lippe aufweisen, welche weiter vom Mittelpunkt bzw. Schwerpunkt (9) ihrer Querschnittsfläche absteht als die übrigen Teile der Profilleiste (5), wobei die Vorrichtung aus einer Einrichtung (15) zum Vereinzeln der biegeschlaffen Profilleisten (5) quer zu ihrer Längsrichtung und aus einer nachfolgenden Einrichtung (16) zum Positionieren der vereinzelten Profilleisten (5) um deren Längsachse besteht, die funktional miteinander verbunden sind.

2. Vorrichtung nach Anspruch 1, dadurch **gekennzeichnet**, daß die Einrichtung (15) zum Vereinzeln biegeschlaffer Profilleisten (5) aus einem befüllbaren Speicherbehälter (17) zur Aufnahme einer größeren Menge Profilleisten (5) in zumindest grob angenäherter paralleler Ausrichtung und einem Vorvereinzelungsmechanismus sowie einem endgültigen Vereinzelungsmechanismus besteht.

3. Vorrichtung nach Anspruch 2, dadurch **gekennzeichnet**, daß der Vorvereinzelungsmechanismus von einer in Längsrichtung der Profilleisten (5) verlaufenden Abgabeöffnung (20) an einer Seite des Speicherbehälters (17) und von einer quer zur Längsrichtung der Profilleisten (5) zu der Abgabeöffnung (20) hin geneigten Auflagefläche (25) in dem Speicherbehälter (17) und von einem über der Abgabeöffnung (20) aufgehängten und die Abgabeöffnung (20) nach oben begrenzenden Klappensystem (21) aus einer quer zu den Profilleisten (5) verschwenkbaren ersten Klappe (22) und einer an dieser angebrachten zweiten Klappe (23) gebildet ist, wobei die zweite Klappe (23) gegenüber der ersten Klappe (22) in der Höhe bewegbar ist.

4. Vorrichtung nach Anspruch 3, dadurch **gekennzeichnet,** daß die Auflagefläche (25) in dem Speicherbehälter (17) in einem flachen Winkel, vorzugsweise ca. 5°, zu der Abgabeöffnung (20) hin geneigt sowie in ihrer Ebene quer zu den Profilleisten (5) um eine bestimmte Weglänge, vorzugsweise um ca. 25 mm, zyklisch hin- und herbewegbar ist.

5. Vorrichtung nach einem der Ansprüche 2 bis 4, dadurch **gekennzeichnet**, daß sich der endgültige Vereinzelungsmechanismus quer zur Längsrichtung der Profilleisten (5) an den Vorvereinzelungsmechanismus anschließt und aus einer sich mit einer Neigung, vorzugsweise von ca. 50°, an den Vorvereinzelungsmechanismus anschließenden Ebene (29) und einem System aus aufeinander abgestimmten, quer zu den Profilleisten (5) verschwenkbaren Vereinzelungsklinken (31) und einem Vereinzelungsanschlag (34) gebildet ist.

6. Vorrichtung nach Anspruch 5, dadurch **gekennzeichnet**, daß an dem Vereinzelungsanschlag (34) zusätzlich ein auf- und abwärts verschiebbarer Abstreifer (38) angebracht ist.

7. Vorrichtung nach einem der vorhergehenden Ansprüche, dadurch **gekennzeichnet**, daß zu der Einrichtung (15) zum Speichern und Vereinzeln biegeschlaffer Profilleisten eine in Richtung auf die unterhalb des Speicherbehälters (17) angeordnete Einrichtung (16) zum Positionieren der vereinzelten Profilleisten (5) stark geneigte, vorzugsweise ca. 75° geneigte, Ebene (40) gehört und daß zwei bis unter die obere Fläche der Ebene (40) zurückziehbare Fangdorne (41) mit einem solchen Abstand voneinander in Längsrichtung der Profilleisten (5) angeordnet sind, daß sie eine vereinzelte biegeschlaffe Profilleiste (5) abfangen und dieser eine Durchbiegung in Richtung auf die Einrichtung (16) zum Positionieren biegeschlaffer Profilleisten (5) verleihen können.

8. Vorrichtung nach einem der vorhergehenden Ansprüche, dadurch **gekennzeichnet**, daß die Einrichtung (16) zum Positionieren der vereinzelten biegeschlaffen Profilleisten (5) ein Walzenpaar (42) aufweist, daß von zwei parallel zueinander angeordneten und mit gleicher Drehrichtung antreibbaren Walzen gebildet ist, wobei zwischen den beiden Walzen ein Walzenspalt (43) mit in Abhängigkeit von der Gestalt und der Größe des Querschnittes der Profilleisten (5) festgelegter Größe besteht und die vereinzelten Profilleisten (5) in zumindest annähernder Längsausrichtung im Bereich des Walzenspaltes (43) auf das Walzenpaar (42) aufgebbar sind.

9. Vorrichtung nach Anspruch 8, dadurch gekennzeichnet, daß die Oberfläche zumindest einer Walze des Walzenpaares (42) örtlich begrenzte Abschnitte aufweist, die von der exakt zylindrischen Mantelfläche abweichen und die vorzugsweise in Reihen auf axparallelen Mantellinien angeordnet sind.

10. Vorrichtung nach Anspruch 8 oder 9, dadurch **gekennzeichnet**, daß eine Detektorvorrichtung (44), insbesondere in Form einer quer zu dem Walzenpaar (42) und innerhalb von fluchtenden Umfangsnuten (55) in den beiden Walzen des Walzenpaares (42) verlaufenden Lichtschranke (45), vorgesehen ist, welche das Erreichen der korrekten Lage der Profilleiste (5) in dem Walzenspalt (43) feststellt.

11. Vorrichtung nach Anspruch 10, dadurch **gekennzeichnet**, daß die in der Detektorvorrichtung (44) gewonnenen Meßgrößen als Signale zur automatischen Steuerung der gesamten Vorrichtung bzw. verschiedener Komponenten der Vorrichtung verwendet werden.

12. Vorrichtung nach einem der Ansprüche 8 bis 11, dadurch **gekennzeichnet**, daß im Rahmen der Einrichtung (16) zum Positionieren biegeschlaffer Profilleisten (5) ein in Längsrichtung des Walzenpaares (42) bewegbarer Ausstoßer (46) zur lagerichtigen Übergabe einer vereinzelten Profilleiste (5) zu einem nachfolgenden Arbeitsprozeß vorgesehen ist, welcher die Profilleiste (5) in Längsrichtung aus dem Walzenspalt (43) entfernt.

13. Vorrichtung nach Anspruch 12, dadurch **gekennzeichnet**, daß der in Längsrichtung des Walzenpaares (42) bewegbare Ausstoßer (46) an dem in Ausstoßrichtung hinteren Ende (13) der im Walzenspalt (43) befindlichen Profilleiste (5) angreift und daß in den Ausstoßer (46) eine, vorzugsweise auf dem Prinzip der Stauluftmessung arbeitende, Prüfeinrichtung integriert ist, welche bei unterschiedlich gestalteten Enden der Profilleisten (5) die richtige Lage der Profilleiste (5) im Walzenspalt (43) hinsichtlich deren Längsrichtung prüft.

14. Vorrichtung nach einem der Ansprüche 8 bis 13, dadurch **gekennzeichnet**, daß unterhalb des Walzenspaltes (43) ein Düsenrohr (47) mit nach oben gerichtete Düsenöffnungen angeordnet ist, welches mit Druckgas bzw. Druckluft beaufschlagbar ist, um eine Profilleiste (5) aus dem Walzenspalt (43) herauszublasen, die ihre richtige Lage in dem Walzenspalt (43) nicht erreicht hat.

## Claims

1. A device for separating and positioning highly flexible profiled strips, preferably in order to deliver them in the correct position to subsequent working processes, in particular for delivering wiper blade rubbers (4) to an automatic wiper blade assembly machine, with the highly flexible profiled strips (5) having a lip which is narrow in comparison with their cross-sectional shape and projects further from the mid-point or center of gravity (9) of their cross-sectional surface than the other parts of the profiled strip (5), wherein the device is made up of an arrangement (15) for separating the highly flexible profiled strips (5) transversely to their longitudinal direction and a following arrangement (16) for positioning the separated profiled strips (5) around its longitudinal axis, with said arrangements being connected to one another functionally.

2. A device according to Claim 1, characterized in that the arrangement (15) for separating highly flexible profiled strips (5) consists of a refillable storage container (17) for storing a large number of profiled strips (5) that are aligned in a roughly parallel manner and a preliminary separating arrangement as well as a final separating arrangement.

3. A device according to Claim 2, characterized in that the preliminary separating arrangement is made up of a discharge opening (20) extending in the longitudinal direction of the profiled strips (5) on one side of the storage container (17) and a supporting surface (25) in the storage container (17), which is slanted transversely to the longitudinal direction of the profiled strips (5) towards the discharge opening (20), and a flap system (21) that is suspended above the discharge opening (20) and limits the discharge opening (20) at the top. The flap system (21) comprises a first flap (22) that can be swivelled transversely to the profiled strips (5) and a second flap (23) attached to the first flap, and the second flap (23) can be moved vertically in relation to the first flap (22).

4. A device according to Claim 3, characterized in that the supporting surface (25) is sloped at a flat angle of preferably about 5° towards the discharge opening (20) in the storage container (17) and that it can be moved to and fro cyclically by a certain distance of preferably about 25 mm in its plane and transversely to the profiled strips (5).

5. A device according to one of the Claims 2 to 4, characterized in that the final separating arrangement follows after the preliminary separating arrangement, is arranged transversely to the longitudinal direction of the profiled strips (5) and made up of a plane (29) sloped at an angle of preferably about 50°, which comes immediately after the preliminary separating arrangement, and a system of coordinated separating catches (31) that can be swivelled transversely to the profiled strips (5) as well as a separating stop (34).

6. A device according to Claim 5, characterized in that a stripper (38) that can be moved upwards and downwards is additionally attached to the separating stop (34).

7. A device according to one of the preceding claims, characterized in that the arrangement (15) for storing and separating highly flexible profiled strips comprises a plane (40) sloped at an angle of preferably 75° in the direction of the arrangement (16) for positioning the separated profiled strips (5) which is located below the storage container (17), and in that two catching elements (41) that can be retracted below the upper surface of the plane (40) are spaced in such a way in the longitudinal direction of the profiled strips (5) that they can catch a separated highly flexible profiled strip (5) and bend it in the direction of the arrangement (16) for positioning highly flexible profiled strips (5).

8. A device according to one of the preceding claims, characterized in that the arrangement (16) for positioning the separated highly flexible profiled strips (5) has a pair of rollers (42) made up of two parallel rollers that rotate in the same direction, with said pair of rollers (42) exhibiting a roller slit (43) the size of which depends on the shape and the size of the cross-section of the profiled strips (5) and moreover, the separated profiled strips (5) are delivered in at least a roughly longitudinal alignment to the pair of rollers (42) in the vicinity of the roller slit (43).

9. A device according to Claim 8, characterized in that the surface of at least one roller of the pair of rollers (42) exhibits non-continuous projections or unevenness on the precisely cylindrical lateral surface and these are preferably arranged in rows along surface lines running parallel to the longitudinal axis.

10. A device according Claim 8 or 9, characterized in that it provides for a detector (44), especially in the form of a light barrier (45) running transversely to the pair of rollers (42) and within circumferential grooves (55) arranged in alignment to one another in the two rollers of the pair of rollers (42), with said detector determining when the profiled strip (5) has reached the correct position in the roller slit (43).

11. A device according to Claim 10, characterized in that the measured variables obtained by the detector (44) are used as signals for the automatic control of the entire device or individual components of the device.

12. A device according to one of the Claims 8 to 11, characterized in that an ejector (46) is provided in the frame of the arrangement (16) for positioning highly flexible profiled strips (5), with said ejector (46) being movable in the longitudinal direction of the pair of rollers (42) in order to deliver the separated profiled strips (5) in a correct position to the subsequent working process and to remove the profiled strip (5) from the roller slit (43) in its longitudinal direction.

13. A device according to Claim 12, characterized in that the ejector (46) movable in the longitudinal direction of the pair of rollers (42) acts on the rear end (13) of the profiled strip (5), viewed in the direction of ejection, in the roller slit (43) and that a testing device, which preferably operates on the principle of stagnate air measurement, is integrated in the ejector (46), with said testing device checking whether the profiled strip (5) is in the correct position in the roller slit (43) with respect to its longitudinal direction when the ends of the profiled strip (5) exhibit different designs.

14. A device according to one of the Claims 8 to 13, characterized in that a nozzle tube (47) with its nozzles pointing upwards is provided below the roller slit (43) and that compressed gas or compressed air can be applied to the nozzle tube (47) in order to blow a profiled strip (5) that has not reached its correct position in the roller slit out of the roller slit (43).

## Revendications

1. Appareil d'isolement unitaire et de positionnement de baguettes profilées souples en flexion, de préférence en vue de leur transfert, en position correcte, vers d'autres opérations de traitement, en particulier pour le transfert de raclettes d'essuyage (4) vers un robot de montage de balais d'essuie-glace, les baguettes profilées (5) souples en flexion comportant une lèvre mince, comparativement à la forme de section transversale de la baguette, la lèvre étant plus éloignée du milieu ou du centre de gravité (9) de sa surface de section transversale, que le sont les autres parties de la baguette profilée (5), l'appareil étant constitué d'un dispositif (15) destiné à isoler individuellement les baguettes profilées (5) souples en flexion, transversalement à leur axe longitudinal, et d'un dispositif suivant (16) destiné à positionner les baguettes profilées (5) ainsi isolées autour de leur axe longitudinal, les deux dispositifs étant fonctionnellement reliés l'un à l'autre.

2. Appareil selon la revendication 1, caractérisé en ce que le dispositif (15) destiné à isoler individuellement les baguettes profilées (5) souples en flexion se compose d'un bac réservoir (17) pouvant être rempli, destiné à recevoir une quantité élevée de baguettes profilées (5) disposées selon une orientation d'alignement au moins grossièrement parallèle, et d'un mécanisme de pré-isolement unitaire ainsi que d'un mécanisme d'isolement unitaire définitif.

3. Appareil selon la revendication 2, caractérisé en ce que le mécanisme de pré-isolement unitaire est constitué d'une ouverture (20) de distribution s'étendant dans le sens longitudinal des baguettes profilées (5), aménagée dans un côté du bac réservoir (17), et d'une tablette (25) s'étendant perpendiculairement au sens longitudinal des baguettes profilées (5) et inclinée en direction de l'ouverture de distribution (20), aménagée dans le bac réservoir (17), et d'un système de volets (21) suspendu au-dessus de l'ouverture de distribution (20) et délimitant l'ouverture de distribution (20) vers le haut, composé d'un premier volet (22) pivotant transversalement aux baguettes profilées (5) et d'un deuxième volet (23) monté sur ce premier, le deuxième volet (23) pouvant être déplacé verticalement par rapport au premier volet (22).

4. Appareil selon la revendication 3, caractérisé en ce que la tablette (25) aménagée dans le bac réservoir (17) est inclinée selon un angle plat, de préférence un angle d'environ 5°, vers l'ouverture de distribution (20), et est déplacée en va-et-vient de façon cyclique, dans son propre plan et transversalement par rapport aux baguettes profilées (5), sur une course prédéterminée d'environ 25 mm de préférence.

5. Appareil selon l'une des revendications 2 à 4, caractérisé en ce que le mécanisme d'isolement unitaire définitif est monté à la suite du mécanisme de pré-isolement unitaire, transversalement au sens longitudinal des baguettes profilées (5), et est composé d'un plan (29) rejoignant le mécanisme de pré-isolement unitaire sous un angle d'inclinaison, de préférence un angle de 50° environ, et d'un système de mentonnets synchronisés d'isolement unitaire (31), oscillant transversalement aux baguettes profilées (5), et d'une butée d'isolement unitaire (34).

6. Appareil selon la revendication 5, caractérisé en ce que la butée d'isolement unitaire (34) est en outre équipée d'un éjecteur (38) coulissant verticalement en va-et-vient.

7. Appareil selon l'une quelconque des revendications précédentes, caractérisé en ce qu'un plan (40) disposé en direction du dispositif (16) monté en aval du bac réservoir (17), destiné au positionnement des baguettes profilées isolées (5), fait partie du dispositif (15) de stockage et d'isolement unitaire des baguettes profilées souples en flexion, ce plan étant fortement incliné, de l'ordre d'environ 75° de préférence, et en ce que deux broches de rattrapage (41), pouvant être rétractées jusque sous la face supérieure du plan (40), sont disposées à une distance l'une de l'autre, dans le sens longitudinal des baguettes profilées (5), qui est telle qu'elles rattrapent une baguette profilée individuelle (5), souple en flexion, et qu'elles lui confèrent une flexion en direction du dispositif (16) de positionnement des baguettes profilées (5) souples en flexion.

8. Appareil selon l'une des revendications précédentes, caractérisé en ce que le dispositif (16) de positionnement des baguettes profilées isolées (5) souples en flexion comporte un couple de cylindres (42), qui est composé de deux cylindres disposés parallèlement l'un à l'autre et pouvant être entraînés dans le même sens de rotation, un intervalle (43) étant formé entre les cylindres, sa taille étant définie en fonction de la forme et de la taille de section des baguettes profilées (5), et les baguettes profilées isolées (5) étant déposées sur le couple de cylindres (42), au niveau de l'intervalle (43) entre les cylindres, selon une orientation au moins à peu près longitudinale.

9. Appareil selon la revendication 8, caractérisé en ce que la surface d'au moins un cylindre du couple de cylindres (42) comporte des sections localement limitées, qui s'écartent d'une surface enveloppante strictement cylindrique, et qui sont de préférence aménagées en séries de génératrices aux axes parallèles.

10. Appareil selon la revendication 8 ou 9, caractérisé en ce qu'un dispositif détecteur (44) est prévu, réalisé notamment sous forme d'une barrière photoélectrique (45) s'étendant perpendiculairement au couple de cylindres (42) et à l'intérieur de gorges périphériques alignées (55) ménagées dans les deux cylindres du couple de cylindres (42), ce dispositif détectant l'arrivée de la baguette profilée (5) dans la bonne position dans l'intervalle (43) entre les cylindres.

11. Appareil selon la revendication 10, caractérisé en ce que les grandeurs de mesure recueillies dans le dispositif détecteur (44) sont utilisées comme signaux pour la commande automatique de l'ensemble de l'appareil ou des différents composants de l'appareil.

12. Appareil selon l'une des revendications 8 à 11, caractérisé en ce que, dans le cadre du dispositif (16) de positionnement des baguettes profilées (5) souples en flexion, un éjecteur (46) mobile dans le sens longitudinal du couple de cylindres (42) est prévu pour assurer le transfert, en position correcte, d'une baguette profilée isolée (5) vers une opération suivante de traitement, l'éjecteur évacuant la baguette profilée (5) dans le sens longitudinal, hors de l'intervalle (43) entre les cylindres.

13. Appareil selon la revendication 12, caractérisé en ce que l'éjecteur (46) mobile dans le sens longitudinal du couple de cylindres (42) attaque la baguette profilée (5) située dans l'intervalle (43) entre les cylindres par son extrémité arrière, dans le sens de l'éjection, et en ce qu'un dispositif de contrôle fonctionnant de préférence selon le principe de la mesure de la pression pneumatique dynamique est intégré dans l'éjecteur (46), ce dispositif vérifiant la bonne position de la baguette profilée (5) dans l'intervalle (43) entre les cylindres, par rapport à l'axe longitudinal de celle-ci, lorsque les extrémités des baguettes profilées (5) présentent des formes différentes.

14. Appareil selon l'une des revendications 8 à 13, caractérisé en ce qu'un tube porte-gicleurs (47) ayant des orifices gicleurs dirigés vers le haut est disposé en dessous de l'intervalle (43) entre les cylindres et peut être alimenté en gaz comprimé ou en air comprimé de manière à éjecter par soufflage une baguette profilée (5) hors de l'intervalle (43) entre les cylindres, lorsque celle-ci a atteint sa position correcte dans l'intervalle (43) entre les cylindres.
